(19) Europäisches Patentamt
European Patent Office
Office européen des brevets

(11) Numéro de publication: **0 252 824 B1**

(12) **FASCICULE DE BREVET EUROPEEN**

(45) Date de publication du fascicule du brevet: **14.03.90**

(51) Int. Cl.$^5$: **B 01 F 17/00,** C 07 F 9/09, A 01 N 25/30

(21) Numéro de dépôt: **87401564.7**

(22) Date de dépôt: **03.07.87**

(54) **Nouvelles compositions tensio-actives à base d'esters phosphoriques leur procédé de préparation et leur application à la formulation de matières actives.**

(30) Priorité: **11.07.86 FR 8610159**

(43) Date de publication de la demande:
**13.01.88 Bulletin 88/02**

(45) Mention de la délivrance du brevet:
**14.03.90 Bulletin 90/11**

(84) Etats contractants désignés:
**AT BE CH DE ES FR GB GR IT LI LU NL SE**

(56) Documents cités:
EP-A-0 077 233
DE-A-3 210 869
DE-A-3 230 925
DE-A-3 302 648
FR-A-1 283 193
FR-A-2 394 602
GB-A-2 115 284
GB-A-2 157 952
US-A-3 117 152
US-A-3 317 305
US-A-3 422 166

(73) Titulaire: **RHONE-POULENC CHIMIE**
**25, quai Paul Doumer**
**F-92408 Courbevoie Cédex (FR)**

(72) Inventeur: **Girardeau, Yvette**
**65 Montée de la Sarra Fontaines Saint Martin**
**F-69270 Fontaines Sur Saone (FR)**
Inventeur: **Ruffo, Georges**
**Route de l'Etra Charly**
**F-69390 Vernaison (FR)**
Inventeur: **Segaud, Christian**
**39, rue de Baligny**
**F-93600 Aulnay Sous Bois (FR)**

(74) Mandataire: **Fabre, Madeleine-France et al**
**RHONE-POULENC INTERSERVICES Service**
**Brevets Chimie 25, quai Paul Doumer**
**F-92408 Courbevoie Cédex (FR)**

**EP 0 252 824 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**Description**

La présente invention vise de nouvelles compositions tensio-actives à base d'esters phosphoriques de dérivés polyoxyalkylénés, sous forme acide ou neutralisée, leur procédé de préparation et leur application à la formulation de matières actives en particulier sous forme de suspensions aqueuses appelées "flowable" qui sont ensuite diluées lors de leur application ou sous forme de granulés qui sont ensuite mis en suspension lors de leur application.

Des compositions à base de monoesters et de diesters phosphoriques de dérivés polyoxyalcoylénés ont déjà été décrits dans les brevets FR—A—1.283.193, FR—A—2.394.602, US—A—3.317.305, US—A—3.422.166, DE—A—3.230.925, GB—A—2.157.952, DE—A—3.210.869, US—A—3.117.152; le rapport molaire diester/monoester dans ce type de composition ne dépasse pas 2.

Il est connu pour préparer des suspensions dans l'eau de matières insolubles d'utiliser des compositions tensio-actives à base d'esters phosphoriques de dérivés polyoxyalkylénés.

Notamment des compositions biocides susceptibles d'être dispersées dans l'eau lors de leur application peuvent être formulées en mettant en oeuvre des surfactants du type mono- et di-esters phosphoriques de tristyrylphénol polyoxyéthylénés ou leurs sels et éventuellement des surfactants non-ioniques du type éthers de polyglycol (brevet anglais n° 2.115.284 et brevet allemand n° 3.302.648).

Lesdits esters phosphoriques sont des mélanges de mono et de diesters phosphoriques sous forme acide ou neutralisée du type SOPROPHOR® 3D 33 ou SOPROPHOR® FL commercialisés par RHONE-POULENC, mélanges dans lesquels la proportion de fonctions monoesters est prédominante par rapport à celle des fonctions diesters.

La demanderesse a trouvé que des compositions présentant des caractéristiques particulièrement intéressantes de mouillabilité et surtout de dispersabilité peuvent être obtenues lorsqu'est mis en oeuvre un mélange tensio-actif de mono- et diesters phosphoriques contenant une proportion suffisante de fonctions diesters.

La présente invention a pour objet des compositions tensio-actives à base d'au moins un mélange de monoester phosphorique de formule I et de diester phosphorique de formule II d'un dérivé polyoxyalkylén é:

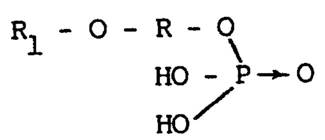

(I)

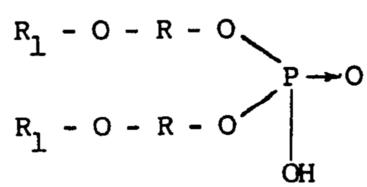

(II)

formules dans lesquelles:

O—R représente une succession de motifs oxyalkylénés en $C_2$—$C_4$ identiques ou différents, le nombre de motifs pouvant aller de 1 à 80

$R_1$ est un radical alkyle ou alcényle, linéaire ou ramifié en $C_8$—$C_{20}$ ou un radical aryle de formule (III)

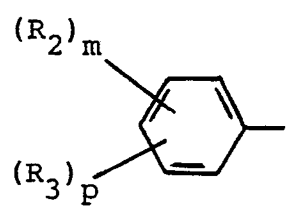

(III)

où

m est un nombre entier égal à 1, 2 ou 3

p est un nombre entier égal à 1 ou 2

$R_3$ est un atome d'hydrogène ou un radical alcoyle en $C_1$—$C_4$

$R_2$ est un radical alcoyle en $C_4$—$C_{12}$ de préférence en $C_8$—$C_9$, ou un radical de formule

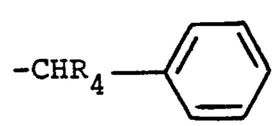

(IV)

où

$R_4$ représente un atome d'hydrogène, un radical alcoyle en $C_1$—$C_4$ ou phényle; lesdites compositions étant caractérisées en ce que le rapport molaire diester phosphorique de formule II/monoester phosphorique de formule I est de l'ordre de 2,13 à 7 et en ce que le ou les mélange(s) de mono et de diester représente(nt) au moins 1% molaire, de préférence au moins 50% molaire, de la composition tensio-active,

le restant étant principalement constitué d'au moins un dérivé polyoxyalkyléné de formule V

$$R'_1—O—R'—OH \quad (V)$$

formule dans laquelle les symboles $R'_1$ et O—R' ont la même signification que les symboles $R_1$ et O—R et sont indentiques ou non aux symboles $R_1$ et O—R des formules I et II. Préférentiellement les symboles $R'_1$ et O—R' sont identiques aux symboles $R_1$ et O—R.

Les monoesters phosphoriques et les diesters phosphoriques entrant préférentiellement dans la composition tensio-active faisant l'objet de l'invention, présentent un radical $R_1$ du type tri(phényl-1 éthyl) phényle, di-(phényl-1 éthyl)phényle, nonylphényle, octylphényle, dodecylphényle, tridécyle, octadécyle, octadécényle, R étant un radical éthylène et/ou propylène et le nombre de motifs O—R étant compris entre 3 et 60.

A titre d'exemples d'esters phosphoriques de formule I et II, on peut citer:

les mono et diester phosphoriques de tri-(phényl-1 éthyl) phénols polyoxyéthylénés ayant de 10 à 40 moles d'oxyde d'éthylène par mole de phénol;

les mono et diester phosphoriques de di-(phènyl-1 éthyl) phénols polyoxyéthylénés ayant de 3 à 20 moles d'oxyde d'éthylène par mole de phénol;

les mono et diester phosphoriques de nonylphénols ou d'octylphénols polyoxyéthylénés ayant de 5 à 40 moles d'oxyde d'éthylène par mole de phénol;

les mono et diester phosphoriques d'alcool oxo en $C_{13}$ polyoxyéthylénés ayant de 3 à 20 moles d'oxyde d'éthylène par mole de alcool;

les mono et diester phosphoriques de tri-(phényl-1 éthyl) phénols polyoxyéthylénés et polyoxypropylénés ayant de 5 à 40 moles d'oxyde d'éthylène et de 5 à 40 moles d'oxyde de propylène réparties d'une manière statistique ou séquencée;

les mono et diester phosphoriques de di(phényl-1 éthyl) phénols polyoxyéthylénés et polyoxypropylénés ayant de 5 à 40 moles d'oxyde d'éthylène et de 5 à 40 moles d'oxyde de propylène réparties d'une manière statistique ou séquencée.

Les derivés polyoxyalkylénés de formule V préférentiellement mis en oeuvre présentent un radical $R'_1$ du type tri-(phényl-1 éthyl) phényle, di-(phényl-1 éthyl) phényle, nonyl phényle, octylphényle, dodécylphényle, tridécyle, octadécyle, octadécenyle R étant un radical éthylène et/ou propylène et le nombre de motifs O—R étant compris en 3 et 60.

A titre d'exmples particuliers, on peut citer:

le tri-(phényl-1 éthyl) phénol polyoxyéthyléné ayant de 10 à 40 moles d'oxyde d'éthylène par mole de phénol

le di-(phényl-1 éthyl) phénol polyoxyéthyléné ayant de 3 à 20 moles d'oxyde d'éthylène par mole de phénol

le nonylphénol ou l'octylphénol polyoxyéthyléné ayant de 5 à 40 moles d'oxyde d'éthylène par mole de phénol

l'alcool oxo en $C_{13}$ polyoxyéthyléné ayant de 3 à 20 moles d'oxyde d'éthylène par mole d'alcool

le tri-(phényl-1 éthyl) phénol polyoxyéthyléné et polyoxypropyléné ayant de 5 à 40 moles d'oxyde d'éthylène et de 5 à 40 moles d'oxyde de propylène réparties d'une manière statistique ou séquencée

le di-(phényl-1 éthyl) phénol polyoxyéthyléné et polyoxypropyléné ayant de 5 à 40 moles d'oxyde d'éthylène et de 5 à 40 moles d'oxyde de propylène réparties d'une manière statistique ou séquencée.

Les compositions faisant l'objet de l'invention peuvent être obtenues par simple mélange des dérivés I, II et V, selon les quantités ci-dessus indiquées, à une température suffisante pour avoir un mélange homogène. Ce mode de préparation est particulièrement utilisé lorsque les symboles $R'_1$ et O—R' ne sont pas identiques à $R_1$ et O—R.

La présente invention a également pour objet un procédé de préparation de compositions tensio-actives à base d'un mélange de monoesterphosphorique de formule I et de diester phosphorique de formule II d'un dérivé polyoxyalcoyléné présentant un rapport molaire diester phosphorique/monoester phosphorique d'au moins 0,9 et généralement de l'ordre de 0,9 à 7.

Ledit procédé est réalisé par phosphatation d'au moins un dérivé polyoxyalkyléné de formule $R_1$—OR—OH par de l'anhydride phosphorique puis éventuellement neutralisation des fonctions acides, ledit procédé étant caractérisé en ce que l'opération de phosphatation est réalisée en deux étapes;

une étape de phosphatation proprement dite réalisée par introduction en continu de l'anhydride phosphorique au sein d'un milieu soumis à un régime turbulent d'agitation, milieu constitué par ledit dérivé polyoxyalkylèné contenant de l'eau en quantité suffisante pour initier la réaction de phosphatation, à une température de l'ordre de 35—40°C en début de réaction, ladite température étant maintenue à une température inférieure ou égale à 45°C jusqu'en fin d'introduction de l'anhydride phosphorique, la quantité totale d'anhydride phosphorique mise en oeuvre correspondant à un rapport molaire dérivé polyoxyalkyléné/$P_2O_5$ égal à 3 ± 0,3.

suivie d'une étape de mûrissement du milieu réactionnel obtenu, réalisée en régime turbulent d'agitation à une température comprise entre 40 et 60°C.

La quantité d'eau présente dans le dérivé polyoxyalkyléné est celle juste nécessaire pour initier la réaction de phosphatation, l'eau formée en cours de réaction étant suffisante pour entretenir ladite

réaction; cette quantité d'eau à mettre en oeuvre est généralement de l'ordre de 0,0025 à 0,05 mole par mole de dérivé polyoxyalkyléné.

La température maintenue pendant l'étape de phosphatation doit être suffisante pour obtenir un milieu de viscosité suffisamment basse pour être soumis à un régime turbulent d'agitation mais ne doit pas dépasser 45°C, la température pendant l'étape de mûrissement devant être maintenue entre 40 et 60°C; ces deux conditions sont nécessaires pour obtenir un mélange de monoesterphosphorique et de diester phosphorique dans le rapport revendiqué.

L'ensemble de l'opération de phosphatation peut être réalisé à pression atmosphérique; la premièreɪre étape peut durer de 1 à 6 heures et la seconde de 30 mn à 2 heures.

L'éventuelle opération de neutralisation des fonctions acides peut être réalisé à l'aide d'une base en quantité suffisante pour obtenir une composition présentant un pH d'au moins 7 et généralement de l'ordre de 7,5 à 8.

Parmi les bases pouvant être mises en oeuvre on peut citer:

les hydroxydes alcalins (soude, potasse . . .)

les amines (diéthanolamine, triéthanolamine, morpholine, N-méthylcyclohexylamine . . .).

Cette opération étant exothermique, elle est réalisée sous agitation turbulente à une température telle que celle du milieu ne dépasse pas 60°C; industriellement celle-ci est réalisée à une température de l'ordre de 45°C et dure généralement de 1/4 d'heure à 3/4 d'heure environ.

La présente invention a également pour objet des compositions tensio-actives obtenues par neutralisation des fonctions acides des compositions tensio-actives faisant l'objet de l'invention, selon la méthode de neutralisation ci-dessus indiquée.

Les compositions tensio-actives de l'invention acides ou neutralisées ou celles issues de procédé de l'invention sont particulièrement bien adaptées à la formulation de matières actives insolubles dans l'eau ou difficilement solubles dans l'eau nécessitant une mise en suspension lors de leur application.

La ou les matières actives doivent, comme mentionné, être insolubles dans l'eau ou difficilement solubles dans l'eau à la température ambiante qui est le plus souvent comprise entre 15 et 25°C.

Par l'expression "difficilement soluble", on entend une solubilité inférieure à 1% en poids.

A titre de matières actives susceptibles d'être formulées selon l'invention, on peut citer les pigments et charges, les colorants, les azurants optiques ou divers additifs dans diverses industries tels que les matières plastiques, les peintures, le textile, le béton, la cosmétique, la pharmacie, etc. . .

Un domaine privilégié d'application de l'invention est la phytopharmacie et plus spécialement la formulation des matières actives telles que les insecticides, acaricides, les fongicides et leurs diverses associations, les herbicides, les nématicides, les molluscicides, les attractifs, les répulsifs, les rodenticides.

Comme exemples d'insecticides convenant à l'invention, on peut citer ceux qui appartiennent aux familles:

des organo-halogénés ou chlorés;
des carbinols;
des organophosphorés;
des sulfones et sulfonates;
des carbamates;
des benzoyl urées;
les pyrethrinoides de synthèse;

Les fongicides susceptibles d'être mis en oeuvre dans l'invention peuvent être choisis parmi:

les carbamates;
les dérivés du benzène;
les dérivés du phénol;
les quinones;
les dicarboximides;
les amines, les amides;
les diazines;
les sulfamides et dérivés soufrés;
les guanidines;
les composés hétérocycliques;
les monoéthyl phosphites métalliques;
les organostanniques;

A titre de substances chimiques présentant des propriétés herbicides, on peut faire appel à celles qui se retrouvent dans les formules chimiques suivantes:

les composés phénoliques;
les carbamates;
les urées substituées;
les diazines;
les triazines;
les amides;
les ammoniums quaternaires;
les benzonitriles;

les toluidines;
les triazoles et autres;

Il est possible de mettre en oeuvre une ou plusieurs matières actives appartenant à la même classe de biocides ou à une classe différente.

Un mode d'application de la composition tensio-active faisant l'objet de l'invention réside dans la formulation d'au moins une matière active sous forme de microgranulés.

Si la matière active se trouve à l'état liquide, elle peut être absorbée sur un support pulvérulent tel que des silicates de calcium, des silices précipitées à haut pouvoir absorbant (par exemple le ZEOSIL 39 A® de RHONE-POULENC) mises en quantité suffisante pour obtenir une poudre sèche.

Les microgranulés réalisés selon l'invention comprennent:
au moins un matière active
la composition tensio-active faisant l'objet de l'invention et éventuellement un ou plusieurs autre(s) tensio-actif(s) anionique(s) ou non-ionique(s) usuel(s) dans ce type d'application
un agent liant
éventuellement un agent mouillant
éventuellement un charge
éventuellement un agent désintégrant
et éventuellement des produits auxiliaires.

Les proportions pondérales des différents constituants sont généralement les suivantes:
de 10 à 95% de matière(s) active(s)
de 3 à 10% de composition tensio-active de l'invention
de 2 à 10% de liant
de 0 à 75% de charge(s)
de 0 à 5% d'agent(s) mouillant(s)
de 0 à 5% d'agent(s) désintégrant(s).

Parmi les liants pouvant être mis en oeuvre on peut citer:

les copolymères obtenus à partir d'un acide carboxylique insaturé et d'un composé α-oléfinique et/ou d'un composé vinylique tels que les copolymères anhydride maleïquediisobutylène vendus par les Sociétés RHONE-POULENC ou GERONAZZO sous les dénominations commerciales SOPROPON T 36®,3®, SOPROPON T 36 K® ou GEROPON TA 72®.

les copolymères carboxyliques tels que les acides polyacryliques vendus par RHONE-POULENC sous la dénomination DISPERSANT DG® ou DA®.

les polynaphtalène sulfonates, les polyalkylnaphtalène sulfonates vendus par RHONE-POULENC sous la dénomination SUPRAGIL NS 90® ou MNS 90® ou par GERONAZZO sous la dénomination GEROPON RM 210®.

Parmi les tensio-actifs pouvant être présents à côté de la composition tensio-active de l'invention, on peut citer les dérivés polyoxyéthylénés et/ou polyoxypropylénés des alcools aliphatiques, les amides gras éventuellement polyoxyéthylénés.

Parmi les agents mouillants pouvant éventuellement être présents on peut citer:

les savons de métaux alcalins tels que les sels de sodium ou de potassium d'acides gras saturés ou insaturés en $C_8$—$C_{24}$, le N-lauryl sarcosinate de sodium, le N-acylsarcosinate de sodium.

les sulfonates alcalins tels que les alcoylsulfonates du type diéthylhexylsulfosuccinate de sodium; les alcoylbenzène sulfonates du type nonyl- ou dodécyl-benzènesulfonates de sodium, de diéthanolamine; de triéthanolamine ou de N-méthylcyclohexylamine; les alcoylnaphtalène sulfonates alcalins; les N-alcoyltaurates alcalins.

les sulfates et les produits sulfatés tels que les alcoylsulfates alcalins du type laurylsulfate de sodium; les alcools gras polyoxyéthylénés et sulfatés; les alcoyl-phénols polyoxyéthylénés et sulfatés.

Parmi les charges pouvant être mises en oeuvre on peut citer des composés inertes naturels broyés tels que kaolin, attapulgite, bentonite, craie, talc . . . ou des produits synthétiques tels que la silice de précipitation, de combustion, le carbonate de calcium . . .

Les agents désintégrants ont pour fonction d'aider la libération de la matière active et peuvent être de la bentonite, de la fécule de maïs ou des sels minéraux très solubles tels que le bicarbonate de sodium, le chlorure de sodium . . .

Les produits auxiliaires sont plus spécialement:
des agents anti-moussants tels que ceux du type polysiloxanes
des agents anti-mottants du type silice précipitée
des agents anti-statiques tels que le chlorure de lithium, le sel de potassium de l'acide tridécylphosphorique
des agents protecteurs vis-à-vis de l'oxydation, des UV ou des variations de pH
des additifs divers tels que colorants ou adjuvants destinés à modifier l'adhésion de la bouillie de traitement sur le végétal.

Lesdits granulés peuvent être préparés selon les méthodes de granulation ou d'agglomération connues, par exemple en lit fluidisé, par atomisation si la température de fusion de la matière active le permet, sur plateau tournant, par extrusion . . .

La taille des granulés obtenus peut varier dans d'assez larges mesures entre 100 et 500 micromètres ou

entre 0,1 et 2 mm selon la méthode de granulation utilisée.

Les granulés ainsi obtenus présentent les propriétés suivantes:

très bonne dispersibilité dans l'eau

bonne résistance à la manipulation sans formation de poussière

teneur élevée en matière active

bonne stabilité physico-chimique

bonne fluence.

Un autre mode d'application particulièrement intéressant de la composition tensio-active faisant l'objet de l'invention réside dans la formulation d'au moins une matière active solide sous forme de dispersions aqueuses fluides appelées "Flowable".

La matière active choisie présente un point de fusion supérieur à 65°C et de préférence supérieur à 100°C et ne doit pas être sensible à l'hydrolyse.

Lesdites dispersions contiennent en milieux aqueux:

au moins une matière active solide

la composition tensio-active de l'invention et éventuellement un ou plusieurs autre(s) tensio-actif(s) anionique(s) ou non-ionique(s) usuels dans ce type d'application

au moins un anti-gel

éventuellement un agent mouillant

éventuellement un agent épaississant

et des adjuvants divers.

La composition tensio-active de l'invention présente en elle-même un pouvoir mouillant; de ce fait la présence d'un agent mouillant n'est pas indispensable; si toutefois la présence d'un tel agent est désirée, celui-ci pourra être choisi parmi ceux déjà cités ci-dessus.

Les anti-gels ont pour but d'éviter la formation éventuelle de cristaux lors du stockage des dispersions; des anti-gels conventionnels tels que l'éthylène glycol, le propylène glycol, le glycerol, le diéthylène glycol, le triéthylène glycol, le tétraéthylène glycol, l'urée . . . peuvent être utilisés.

Des agents épaississants sont préférentiellement mis en oeuvre et ce dans le but de maintenir en suspension la matière active et d'éviter toute sédimentation au stockage; des agents épaississants organiques hydrosolubles ou susceptibles de gonfler dans l'eau tels que les polysaccharides du type gomme xanthane, les alginates, les méthylcelluloses carboxylées ou hydroxylées, les macromolécules synthétiques du type polyacrylates, polymaléates, polyvinylpyrrolidones, polyéthylène glycols, alcools polyvinyliques . . . ou non-organiques tels que les bentonites, les silices . . . peuvent être utilisés.

Les additifs auxiliaires pouvant être mis en oeuvre sont des agents anti-moussants (polysiloxanes par exemple), des agents protecteurs vis-à-vis de l'oxydation, des rayons UV ou des variations de pH, des colorants, des bactéricides, des adjuvants destinés à modifier l'adhesion de la bouillie de traitement sur le végétal.

Les proportions pondérales des différents constituants des dispersions sont généralement les suivantes:

de 10 à 89% d'eau

de 10 à 65% de matière(s) active(s)

de 0,2 à 20% de composition tensio-active de l'invention

de 0,8 à 20% d'anti-gel

de 0 à 10% d'agent mouillant

de 0 à 5% d'épaississant.

Lesdites dispersions aqueuses peuvent être obtenues d'une manière connue, par exemple par mise en solution de la composition tensio-active dans de l'anti-gel et de l'eau puis mise en dispersion sous forte agitation de la matière active dans la solution, broyage jusqu'à obtenir une taille de particules de l'ordre de 1 à 10 micromètres, puis dégazage et enfin ajustement de la viscosité de la dispersion obtenue par addition d'un agent épaississant et d'eau sous faible agitation afin d'obtenir la concentration désirée et une viscosité de l'ordre de 20 à 60 s mesurée à la coupe FORD n° 4.

Les dispersions ainsi obtenues présentent les propriétés suivantes:

une trés bonne stabilité au stockage

une teneur élevée en matière active

une viscosité faible

une bonne stabilité lorsqu'elle est diluée dans l'eau à la dose d'emploi, et ce pendant la durée de l'application.

Les exemples suivants sont donnés à titre indicatif et ne peuvent être considérés comme une limite du domaine et de l'esprit de l'invention.

Exemple 1

Préparation des compositions tensio-actives de l'invention sous forme acide

Dans un réacteur muni d'un système d'agitation à hélice à régime turbulent, d'un système de refroidissement et d'un système de chauffage, on charge:

3 parties en moles de dérivé polyoxyalkyléné de formule $R_1$—OR—OH (formule V)

La température est portée à 37°C, puis on introduit sous agitation à régime turbulent en continu et à débit constant 1 partie en mole de $P_2O_5$.

La réaction étant exothermique, on maintient par refroidissement la température du milieu à 43°C ± 1°C jusqu'à la fin de l'introduction de $P_2O_5$.

L'introduction de $P_2O_5$ dure environ 1 h 1/4.

En fin d'addition du $P_2O_5$ on laisse la réaction se poursuivre à la même température pendant 30 mn (étape de mûrissement) tout en continuant l'agitation.

Le produit ainsi obtenu est analysé par potentiométrie.

On peut ainsi mesurer le taux de diester, le taux de monoester, et le taux d'acide phosphorique libre.

Dans les tableaux, le rapport diester/monoester sera dénommé "II/I" et la quantité totale de diester et de monoester par "II + I".

Le taux de dérivé polyoxyalkyléné de formule V présent dans le produit obtenu sera dénommé "taux de non-ionique".

## Exemple 2

Préparation des compositions tensio-actives de l'invention neutralisées par de la triéthanolamine ou de la potasse

Le produit obtenu à l'exemple 1 est neutralisé par de la triéthanolamine ou par de la potasse à 38% jusqu'à obtenir un pH du milieu de 8 environ.

Pendant cette opération, le refroidissement est régulé pour que la température ne dépasse pas 45°C.

Dans les tableaux, on entendra par "II/I" le rapport molaire diester/monoester sous forme acide, c'est-à-dire avant neutralisation.

Il en est de même pour l'expression "II + I".

## Exemple 3

Préparation d'un "flowable"

On dissout 6 g de composition tensio-active de l'invention dans 19,5 g de monoéthylèneglycol, puis on ajoute 0,3 g d'antimousse 416/R fabriqué par Rhône-Poulenc et 115,2 g d'eau.

On ajoute lentement sous agitation 135 g de matière active.

L'agitation est maintenue pendant environ 3 mn pour obtenir un mélange homogène.

On obtient ainsi une prédispersion qui est ensuite broyée dans un "Mini Motor Mill"® commercialisé par EIGER ENGINEERING LTD; la chambre de broyage est remplie par 59 g de billes de verre de 1 mm de diamètre, la rotation étant de 4 000 tours/mn. Le broyage est effectué pendant environ 4 mn, ce afin d'obtenir des particules de diamètre compris entre 2 et 6 micrometres.

Le mélange obtenu est laissé pendant 3 à 4 heures au repos (afin d'éliminer les bulles et les mousses présentes).

On ajuste la viscosité du "flowable" obtenu par ajout de 24 g d'une solution à 2% dans l'eau de RHODOPOL 23® fabriqué par Rhône-Poulenc.

Le "flowable" obtenu est contrôle:

contrôle de la granulométrie à l'aide du "Coulter Counter TA II"® commercialisé par la Société Coultronics

mesure de la consistance à la coupe FORD n° 4

contrôle rhéologique et mesure de la viscosité apparente à un gradient de vitesse de 77,112 $s^{-1}$ au Rheomat 30® de la Société Contraves, avant addition de RHODOPOL 23® et après addition de RHODOPOL 23®.

Dans les tableaux, on entendra par:

"Rhodopol 23" le pourcentage en poids dans le flowable de la solution à 2% de Rhodopol 23®

Ø le diamètre moyen après broyage

$vCF_4$ la consistance à la coupe FORD n° 4.

## Exemple 4

On prépare selon le mode opératoire de l'exemple 3 un "flowable" contenant:

comme matière active du plictran (tricyclohexylhydroxy stannate)

comme composition tensio-active, une composition préparée selon le mode opératoire de l'exemple 1 à partir de tri-(phényl-1 éthyl) phénol polyoxyéthyléné ayant 16 moles d'oxyde d'éthylène par mole de phénol.

Cette composition tensio-active présente:

un rapport molaire diester/monoester de 5,53

un quantité molaire totale de diester et de monoester de 94,6%.

un taux d'acide phosphorique libre de 4,1% molaire.

Les propriétés du "flowable" obtenu figurent au tableau I.

## Exemple 5 comparatif

On prépare selon le mode opératoire de l'exemple 3 un "flowable" contenant:

comme matière active du plictran

une composition tensio-active préparée par phosphatation par $P_2O_5$ de tri-(phényl-1 éthyl) phénol polyoxyéthyléné ayant 16 moles d'oxyde d'éthylène par mole de phénol, selon le mode opératoire de

l'exemple 1, à l'exception de l'étape de mûrissement qui est réalisée pendant 1 heure à 90 ± 2°C au lieu de 43 ± 1°C pendant 30 mn.

Cette composition présente:

un rapport molaire diester/monoester de 0,11

une quantité molaire totale de diester et de monoester de 25,5%

un taux d'acide phosphorique libre de 18% molaire.

Les propriétés du "flowable" obtenu figurent au tableau I.

Exemple 6

On prépare selon le mode opératoire de l'exemple 3 un "flowable" contenant:

comme matière active du diuron (dichlorophényl diméthyl urée)

et 1% en poids d'une composition tensio-active préparée selon le mode opératoire de l'exemple 1 à partir de nonylphénolpolyoxyéthyléné ayant 6 moles d'oxyde d'éthylène par mole de phénol.

Cette composition tensio-active présente:

un rapport molaire diester/monoester de 2,13

un quantité molaire totale de diester et de monoester de 90,22%

une quantité d'acide phosphorique libre de 2,55% molaire.

La quantité d'eau présente dans le "flowable" est de 118,2 g au lieu de 115,2 g.

Les propriétés du "flowable" obtenu figurent au tableau I.

Exemple 7 comparatif

On prépare selon le mode opératoire de l'exemple 3 un "flowable" contenant:

comme matière active du diuron

et 2% en poids d'une composition tensio-active préparée par phosphatation par $P_2O_5$ de nonylphénol polyoxyéthyléné ayant 6 moles d'oxyde d'éthylène par mole de phénol, selon le mode opératoire de l'exemple 1, à l'exception de l'étape de mûrissement qui est réalisée à 90°C pendant une heure.

Cette composition présente:

un rapport molaire diester/monoester de 0,7

un quantité molaire totale de diester et de monoester de 63,25%

un taux d'acide phosphorique libre de 10,2% molaire.

Les propriétés du "flowable" obtenu figurent au tableau I.

Il est impossible de préparer un "flowable" avec 1% en poids de cette composition tensio-active car le broyage est impossible en raison du pouvoir dispersant insuffisant de cette composition tensio-active.

Exemple 8

On prépare selon le mode opératoire de l'exemple 3 un "flowable" contenant:

comme matière active du carbofuran (2,3-dihydro-2,2-diméthyl-7 benzofuranyl méthylcarbamate)

comme composition tensio-active, un composition préparée par neutralisation à la potasse selon le mode opératoire décrit à l'exemple 2 d'une composition tensio-active identique à celle mise en oeuvre à l'exemple 4 (c'est-à-dire dérivant du tri-(phényl-1 éthyl) phénol polyoxyéthyléné ayant 16 moles d'oxyde d'éthylène par mole de phénol).

La composition tensio-active présente avant neutralisation:

un rapport molaire diester/monoester de 5,53

une quantité molaire totale diester + monoester de 94,6%

une quantité d'acide phosphorique libre de 4,1% molaire.

Les propriétés du "flowable" obtenu figurent au tableau II.

Exemple 9

On prépare selon le mode opératoire de l'exemple 3 un flowable contenant:

comme matière active du carbaryl (N-méthylcarbamate de naphtyle)

comme composition tensio-active, une composition obtenue par neutralisation à la potasse selon le mode opératoire décrit à l'exemple 2 d'une composition tensio-active identique à celle mise en oeuvre à l'exemple 6 (c'est-à-dire dérivant de nonylphénol polyoxyéthyléné ayant 6 moles d'oxyde d'éthylène par mole de phénol).

Cette composition tensio-active présente avant neutralisation:

un rapport molaire diester/monoester de 2,13

une quantité molaire totale de diester et de monoester 90,22%

un taux d'acide phosphorique libre de 2,55% molaire.

Les propriétés du "flowable" obtenu figurent au tableau II.

Exemple 10

On prépare selon le mode opératoire de l'exemple 3 un "flowable" contenant:

comme matière active de la simazine (chloro bis-éthylamino s-triazine)

comme composition tensio-active, une composition obtenue par neutralisation à la potasse selon le mode opératoire décrit à l'exemple 2 d'une composition tensio-active préparée selon le mode opératoire

de l'exemple 1 à partir de nonylphénol polyoxyéthyléné ayant 9 moles d'oxyde d'éthylène par mole de phénol.

Cette composition tensio-active présente avant neutralisation:
un rapport molaire diester/monoester de 1,20
une quantité molaire totale de diester et de monoester de 82,2%
une quantité d'acide phosphorique libre de 1,9% molaire.
Les propriétés du "flowable" obtenu figurent au tableau II.

Exemple 11

On prépare une composition tensio-active en réalisant une opération de phosphatation selon le mode opératoire de l'exemple 1 à partir de tri-(phényl-1 éthyl) phénol polyoxyéthyléné ayant 16 moles d'oxyde d'éthylène par mole de phénol.

L'opération de mûrissement est réalisée pendant 1 heure à 60°C.

La composition tensio-active présente:
un rapport molaire diester/monoester de 0,9
une quantité molaire totale de diester et de monoester de 54,9%

Cette composition est ensuite neutralisée par de la triéthanolamine selon le mode opératoire de l'exemple 2.

Préparation d'un "flowable"

On dissout 30 g de la composition tensio-active ainsi obtenue dans 80 g de monoéthyléneglycol, puis on ajoute 0,3 g d'antimousse 416/R et 392 g d'eau.

On ajoute lentement sous agitation 500 g d'atrazine (chloroéthylaminobutylamino s-triazine).

L'agitation est maintenue pendant 15 mn.

On obtient ainsi une prédispersion qui est ensuite broyée dans un "Dyno Mill KDL"® commercialiséisé par DYNO; la chambre de broyage a un volume de 1,2 litre, elle est remplie par 1,75 kg de billes de verre de 1 mm, la rotatation est de 3 350 tours/mn.

Le broyage est effectué avec deux passages de 18 mn chacun avec un débit de 8,4 litres/h, pour obtenir des particules de diamètre compris entre 0,5 et 2 micrometres.

Le mélange est laissé 12 heures au repos.

Les propriétés du "flowable" obtenu figurent au tableau II.

Exemple 12 comparatif

On prépare selon le mode opératoire de l'exemple 11 un flowable contenant:
comme matière active de l'atrazine
une composition tensio-active préparée selon le mode opératoire de l'exemple 1 par phosphatation du tri-(phényl-1 éthyl) phénol polyoxyéthyléné ayant 16 moles d'oxyde d'éthylène par mole de phénol avec une étape de mûrissement réalisée pendant 1 heure à 85°C , puis neutralisation à la triéthanolamine selon le mode opératoire de l'exemple 2.

Cette composition tensio-active présente avant neutralisation:
un rapport molaire diester/monoester de 0,4
une quantité molaire totale de diester et de monoester de 48,5%
Les propriétés du flowable obtenu figurent au tableau II.

TABLEAU I

| Exemple | 4 | | 5 | | 6 | | 7 | |
|---|---|---|---|---|---|---|---|---|
| matière active | plictran | | plictran | | diuron | | diuron | |
| II/I | 5,53 | | 0,11 | | 2,13 | | 0,7 | |
| II + I | 94,6 | | 25,5 | | 90,22 | | 63,25 | |
| % $PO_4$ $H_3$ | 4,1 | | 18 | | 2,55 | | 10,2 | |
| % non-ionique | 1,3 | | 56,5 | | 7,23 | | 26,55 | |
| % tensio-actif en poids dans le flowable | 2 | | 2 | | 1 | | 2 | |
| Rhodopol 23 | 0 | 8 | 0 | 8 | 0 | 8 | 0 | 8 |
| v $CF_4$ en s | 14 | 37 | 17 | 45 | 14 | 25 | 15 | 30 |
| v apparente en mPa s | 17,5 | 106 | 22 | 107 | 6,6 | 73,3 | 28 | 86,3 |
| v Bingham en mPa s | 19 | 32,3 | 28 | 42,2 | 14,3 | 23,6 | 19,6 | 27,9 |
| seuil d'écoulement en $s^{-1}$ | 0 | 6,4 | 0 | 6,7 | 0 | 4,1 | 0,18 | 4,9 |
| $\phi$ en micrometres | 2,9 | | 2,9 | | 3,4 | | 2,9 | |
| médiane en micrometres | 1,91 | | 1,80 | | 2,48 | | 2,45 | |
| mode en micrometres | 1,79 | | 1,79 | | 2,26 | | 2,26 | |

TABLEAU II

| Exemple | 8 | | 9 | | 10 | | 11 | 12 |
|---|---|---|---|---|---|---|---|---|
| matière active | carbofuran | | carbaryl | | simazine | | atrazine | atrazine |
| II/I | 5,53 | | 2,13 | | 1,20 | | 0,9 | 0,4 |
| II + I | 94,6 | | 90,22 | | 82,2 | | 54,9 | 48,5 |
| % $PO_4H_3$ | 4,1 | | 2,55 | | 1,9 | | | |
| % non-ionique | 1,3 | | 7,23 | | 15,9 | | | |
| % tensio-actif en poids dans le flowable | 2 | | 2 | | 2 | | 6 | 6 |
| Rhodopol 23 | 0 | 8 | 0 | 8 | 0 | 6* | 0 | 0 |
| v $CF_4$ en s | 14 | 30 | 17 | 39 | 25 | 50 | 18 | 24 |
| v apparente en mPa s | 17,8 | 91,6 | 42,3 | 139 | 120 | 139 | 92 | 222 |
| v Bingham en mPa s | 21,4 | 30,3 | 27,1 | 56,2 | 50 | 55,6 | 1 000 | 1 200 |
| seuil d'écoulement en $s^{-1}$ | 0 | 3,5 | 1,2 | 7,71 | 0 | 5,9 | 4,2 | 62 |
| ∅ en micrometres | 3,94 | | 5,08 | | 4,39 | | 1,3 | 1,3 |
| médiane en micrometres | 2,99 | | 3,52 | | 2,91 | | | |
| mode en micrometres | 2,85 | | 2,26 | | 2,85 | | | |

* la quantité d'eau est augmentée de 2 % en poids dans le flowable

**Revendications**

1. Procédé de préparation des compositions tensio-actives par phosphatation par de l'anhydride phosphorique d'au moins un dérivé polyoxyalkyléné $R_1$—OR—OH (formule (V) formule dans laquelle:

O—R représente une succession de motifs oxyalkylénés en $C_2$—$C_4$ identiques ou différents, le nombre de motifs pouvant aller de 1 à 80

$R_1$ est un radical alkyle ou alcényle, linéaire ou ramifié en $C_8$—$C_{20}$ ou un radical aryle de formule (III)

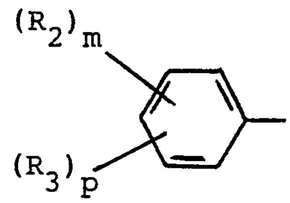

(III)

où

m est un nombre entier égal à 1, 2 ou 3

p est un nombre entier égal à 1 ou 2

$R_3$ est un atome d'hydrogène ou un radical alcoyle en $C_1$—$C_4$

$R_2$ est un radical alcoyle en $C_4$—$C_{12}$ ou un radical de formule

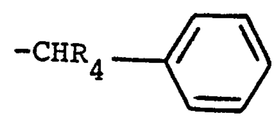

(IV)

où

$R_4$ représente un atome d'hydrogène, un radical alcoyle en $C_1$—$C_4$ ou phényle; et eventuellement neutralisation des fonctions acides, ledit procédé étant caractérisé en ce que l'opération de phosphatation est réalisée en deux étapes:

une étape de phosphatation proprement dite réalisée par introduction en continu de l'anhydride phosphorique au sein d'un milieu soumis à un régime turbulent d'agitation, milieu constitué par ledit dérivé polyoxyalkyléné contenant de l'eau en quantité suffisante pour initier la réaction de phosphatation, à une température de l'ordre de 35—40°C en début de réaction, ladite température étant maintenue à une température inférieure ou égale à 45°C jusqu'en fin d'introduction de l'anhydride phosphorique, la quantité totale d'anhydride phosphorique mise en oeuvre correspondant à un rapport molaire dérivé polyoxyalkyléné/$P_2O_5$ égal à 3 ± 0,3

suivie d'une étape de mûrissement du milieu réactionnel obtenu réalisée en regime turbulent d'agitation à une température comprise entre 40 et 60°C.

2. Procédé selon la revendication 1 caractérisé en ce que $R_1$ représente un radical tri-(phényl-1 éthyl) phényle, di-(phényl-1 éthyl) phényle, nonylphényle, octylphényle, dodécylphényle, tridécyle, octadécyle, octadécényle, et en ce que R représente un radical éthylène et/ou propylène, le nombre de motifs O—R allant de 3 à 60.

3. Procédé selon la revendication 1 ou 2 caractérisé en ce que la quantité d'eau est de l'ordre de 0,0025 à 0,05 mole par mole dérivé polyoxyalkyléné de formule V.

4. Procédé selon l'une quelconque des revendications 1 à 3 caractérisé en ce que l'opération de neutralisation est réalisée à l'aide d'une base en quantité suffisante pour obtenir un pH d'au moins 7, à une température ne dépassant pas 60°C.

5. Procédé selon la revendication 4 caractérisé en ce que la base est un hydroxyde alcalin ou une amine.

6. Compositions tensio-actives à base d'au moins un mélange de monoesterphosphorique de formule I et de diester phosphorique de formule II d'un dérivé polyoxyalkyléné:

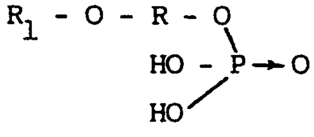

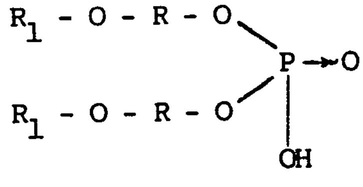

(I) (II)

formules dans lesquelles:

O—R représente une succession de motifs oxyalkylénés en $C_2$—$C_4$ identiques ou différents, le nombre de motifs pouvant aller de 1 à 80

$R_1$ est un radical alkyle ou alcényle, linéaire ou ramifié en $C_8$—$C_{20}$ ou un radical aryle de formule (III)

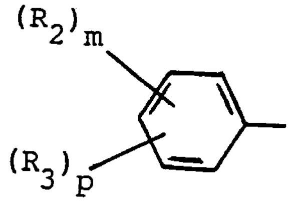

(III)

où

m est un nombre entier égal à 1, 2 ou 3
p est un nombre entier égal à 1 ou 2
$R_3$ est un atome d'hydrogène ou un radical alcoyle en $C_1$—$C_4$
$R_2$ est un radical alcoyle en $C_4$—$C_{12}$ ou un radical de formule

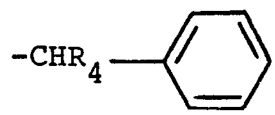

(IV)

où

$R_4$ représente un atome d'hydrogène, un radical alcoyle en $C_1$—$C_4$ ou phènyle; lesdites compositions étant caractérisées en ce que le rapport molaire diester phosphorique de formules II/monoester phosphorique de formule I est de l'ordre de 2,13 à 7 et en ce que ou les mélange(s) de mono et de diesterr représente(nt) au moins 1% molaire, de la composition tensio-active, le restant étant principalement constitué d'au moins un dérivé polyoxyalkyléné de formule V

$$R'_1—O—R'—OH \quad (V)$$

formule dans laquelle les symboles $R'_1$ et O—R' ont la même signification que les symboles $R_1$ et O—R et sont indentiques ou non aux symboles $R_1$ et O—R des formules I et II.

7. Compositions tensio-actives selon la revendication 6 caractérisées en ce que le ou les melange(s) de mono et de diester(s) représente(nt) au moins 50% molaire de la composition tensio-active.

8. Compositions selon la revendication 6 ou 7 caractérisées en ce que $R_1$ et $R'_1$ sont identiques ou différents et représentent un radical tri(phényl-1 éthyl) phényle, di-(phényl-1 éthyl)phényle, nonylphényle, octylphényle, dodécylphényle, tridécyle, octadécyle, octadécényle et en ce que R et R' sont identiques ou différents et représentent un radical éthylène et/ou propylène, le nombre de motifs O—R ou O—R' allant de 3 à 60.

9. Compositions tensio-actives neutralisées obtenues par neutralisation des fonctions acides des compositions tensio-actives faisant l'objet de l'une quelconque des revendications 6 à 8.

10. Compositions tensio-actives neutralisées selon la revendication 9 caractérisées en ce que l'agent de neutralisation est un hydroxyde alcalin ou une amine.

11. Application des compositions tensio-actives obtenues selon la procédé faisant l'objet de l'une quelconque des revendications 1 à 5 à la formulation de matières actives insolubles dans l'eau.

12. Application des compositions tensio-actives faisant l'objet de l'une quelconque des revendications 6 à 10 à la formulation de matières actives insolubles dans l'eau.

13. Application selon la revendication 11 ou 12 caractérisé en ce que les compositions sont appliquées sous forme de microgranulés.

14. Microgranulés caractérisés en ce qu'ils contiennent:
de 10 à 95% de matière(s) active(s) insoluble(s) dans l'eau
de 3 à 10% de composition tensio-active faisant l'objet de l'une quelconque des revendications 1 à 5 ou 6 à 10
de 2 à 10% de liant
de 0 à 75% de charge
de 0 à 5% d'agent mouillant
de 0 à 5% d'agent désintégrant.

15. Application des compositions tensio-actives faisant l'objet de l'une quelconque des revendications 1 à 5 ou 6 à 10 à la formulation de matières actives insolubles dans l'eau sous forme de dispersions aqueuses fluides.

16. Dispersions aqueuses fluides caractérisées en ce qu'elles contiennent:
de 10 à 89% d'eau
de 10 à 65% de matière(s) active(s)
de 0,2 à 20% de composition tensio-active faisant l'objet de l'une quelconque des revendications 1 à 5 ou 6 à 10
de 0,8 à 20% d'anti-gel
de 0 à 10% d'agent mouillant
de 0 à 5% d'épaississant.

**Patentansprüche**

1. Verfahren zur Herstellung oberflächenaktiver Zusammensetzungen durch Phosphatierung wenigstens einer polyoxyalkylenierten Verbindung $R_1$—OR—OH (Formel (V)) mit Phosphorsäureanhydrid, wobei in der Formel:

O—R eine Folge oxyalkylenierter Baueinheiten mit $C_2$—$C_4$ darstellt, die identisch oder verschieden sind, wobei die Anzahl der Baueinheiten von 1 bis 80 betragen kann

$R_1$ ein Alkyl- oder Alkenylrest ist, der linear oder verzweigt ist, mit $C_8$—$C_{20}$ oder ein Arylrest der Formel (III)

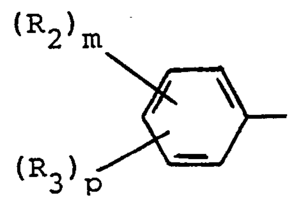

(III)

in der

m eine ganze Zahl gleich 1, 2 oder 3 ist

p eine ganze Zahl und gleich 1 oder 2 ist

$R_3$ ein Wasserstoffatom oder ein Alkoylrest mit $C_1$—$C_4$ ist

$R_2$ ein Alkoylrest mit $C_4$—$C_{12}$ oder ein Rest der Formel

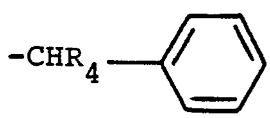

(IV)

ist,

in der

$R_4$ ein Wasserstoffatom, einen Alkoylrest mit $C_1$—$C_4$ oder Phenyl darstellt;

une gegebenenfalls Neutralisierung der Säurefunktionen, wobei dieses Verfahren dadurch gekennzeichnet ist, daß die Phosphatierung in zwei Schritten durchgeführt wird:

einem eigentlichen Phosphatierungsschritt, der durch kontinuierliche Zugabe von Phosphorsäureanhydrid in ein Medium erfolgt, das einer turbulenten Rührung unterworfen wird, wobei dieses Medium aus der polyoxyalkylenierten Verbindung besteht, die Wasser in ausreichender Menge enthält, um die Phosphatierungsreaktion einzuleiten, bei einer Temperatur in der Größenordnung von 35 bis 40°C zu Beginn der Reaktion, wobei diese Temperatur bei einer Temperatur kleiner oder gleich 45°C gehalten wird bis zum Ende der Zugabe des Phosphorsäureanhydrids, und wobei die Gesamtmenge des umgesetzten Phosphorsäureanhydrids einem molaren Verhältnis polyoxyalkylenierte Verbindung/$P_2O_5$ von 3 ± 0,3 entspricht,

gefolgt von einem Schritt der Reifung des erhaltenen Reaktionsmediums, der im Bereich turbulenter Rührung bei einer Temperatur zwischen 40 und 60°C durchgeführt wird.

2. Verfahren nach Anspruch 1, dadurch gekennzeichnet, daß $R_1$ einen tri-(1-Phenyl-ethyl)phenylrest, di-(1-Phenyl-ethyl)phenylrest, Nonylphenylrest, Octylphenylrest, Dodecylphenylrest, Tridecylrest, Octadecylrest, Octodecenylrest darstellt, und daß R einen Ethylen- und/oder Propylenrest darstellt, wobei die Anzahl der Baugruppen O—R zwischen 3 und 60 beträgt.

3. Verfahren nach Anspruch 1 oder 2, dadurch gekennzeichnet, daß die Menge an Wasser in etwa 0,0025 bis 0,05 Mol pro Mol der polyoxyalkylenierten Verbindungen der Formel V beträgt.

4. Verfahren nach einem der Ansprüche 1 bis 3, dadurch gekennzeichnet, daß der Neutralisationsschritt mit Hilfe einer Base durchgeführt wird, die in ausreichender Menge zugegeben wird, um einen pH von wenigstens 7 zu erhalten, bei einer Temperatur, die 60°C nicht überschreitet.

5. Verfahren nach Anspruch 4, dadurch gekennzeichnet, daß die Base ein Alkalihydroxid oder ein Amin ist.

6. Oberflächenaktive Zusammensetzungen auf Basis wenigstens eines Gemischs eines Monophosphorsäureesters der Formel I und eines Phosphorsäurediesters der Formel II einer polyoxyalkylenierten Verbindung:

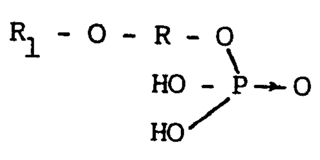

(I)

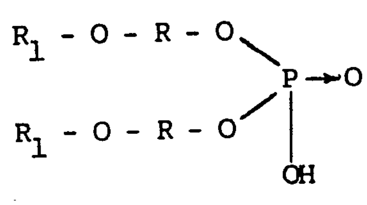

(II)

wobei in diesen Formeln:

O—R eine Folge oxyalkylenierten Baueinheiten mit $C_2$—$C_4$ darstellt, die identisch oder verschieden sind, wobei die Anzahl der Baueinheiten von 1 bis 80 betragen kann

$R_1$ einen Alkyl- oder Alkenylrest darstellt, der linear oder verzweigt sein kann mit $C_8$—$C_{20}$ oder oder Arylrest der Formel (III)

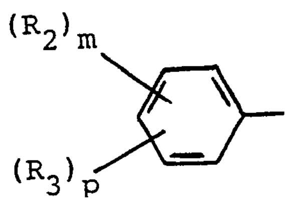

(III)

in der

m eine ganze Zahl ist, die gleich 1, 2 oder 3 ist

p eine ganze Zahl ist, die gleich 1 oder 2 ist

$R_3$ ein Wasserstoffatom oder ein Alkoxylrest mit $C_1$—$C_4$ ist

$R_2$ ein Alkoylrest mit $C_4$—$C_{12}$ oder ein Rest der Formel

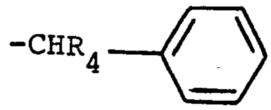

(IV)

ist,

in der

$R_4$ ein Wasserstoffatom einen Alkoylrest mit $C_1$—$C_4$ oder Phenyl darstellt; wobei diese Zusammensetzungen dadurch gekennzeichnet sind, daß das molare Verhältnis des Phosphorsäurediesters der Formel II zum Phosphorsäuremonoester der Formel I in etwa 2,13 bis 7 beträgt und daß das (oder die) Gemisch(e) des(der) Mono- und Diester wenigstens 1 Mol-% der oberflächenaktiven Zusammensetzung ausmachen, wobei der Rest hauptsächlich aus wenigstens einer polyoxyalkylenierten Verbindung der Formel (V) besteht

$$R'_1\text{—O—}R'\text{—OH} \qquad \text{(V)}$$

in der die Symbole $R'_1$ und O—R' die gleiche Bedeutung haben wie die Symbole $R_1$ und O—R und mit den Symboles $R_1$ und O—R der Formeln I und II identisch oder von diesen unterschiedlich sind.

7. Oberflächenaktive Zusammensetzungen nach Anspruch 6, dadurch gekennzeichnet, daß das (die) Gemisch(e) des (der) Mono- und Diester wenigstens 50 Mol-% der oberflächenaktiven Zusammensetzung ausmachen.

8. Zusammensetzungen nach Anspruch 6 oder 7, dadurch gekennzeichnet, daß $R_1$ und $R'_1$ identisch oder verschieden sind und einen tri-(1-Phenyl-ethyl)phenylrest, di-(1-Phenyl-ethyl)phenylrest, Nonylphenylrest, Octylphenylrest, Dodecylphenylrest, Tridecylrest, Octadecylrest, Octadecenylrest darstellen und daß R und R' identisch oder verschieden sind und jeweils einen Ethylenrest und/oder Propylenrest darstellen, wobei die Anzahl der Baueinheiten O—R oder O—R' von 3 bis 60 beträgt.

9. Neutralisierte oberflächenaktive Zusammensetzungen, erhalten durch Neutralisation der Säurefunktionen der oberflächenaktiven Verbindungen, die Gegenstand eines der Ansprüche 6 bis 8 sind.

10. Oberflächenaktive neutralisierte Zusammensetzungen gemäß Anspruch 9, dadurch gekennzeichnet, daß das Neutralisierungsagens ein Alkalihydroxid oder ein Amin ist.

11. Verwendung oberflächenaktiver Zusammensetzungen, die gemäß einem Verfahren nach einem der Ansprüche 1 bis 5 erhalten wurden, zur Formulierung in Wasser unlöslicher Wirkstoffe.

12. Verwendung oberflächenaktiver Zusammensetzungen gemäß einem der Ansprüche 6 bis 10, zur Formulierung in Wasser unlöslicher Wirkstoffe.

13. Verwendung nach Anspruch 11 oder 12, dadurch gekennzeichnet, daß die Zusammensetzungen in Form von Mikrogranulat verwendet werden.

14. Mikrogranulat, dadurch gekennzeichnet, daß dieses enthält:

10 bis 95% in Wasser unlösliche(n) Wirkstoff(e)

3 bis 10% oberflächenaktive Zusammensetzung gemäß einem der Ansprüche 1 bis 5 oder 6 bis 10

2 bis 10% Bindemittel

0 bis 75% Füllstoff

0 bis 5% Netzmittel

0 bis 5% Abbaumittel.

15. Verwendung oberflächenaktiver Zusammensetzungen gemäß einem der Ansprüche 1 bis 5 oder 6 bis 10 zur Formulierung in Wasser unlöslicher Wirkstoffe in Form fließfähiger wässriger Dispersionen.

16. Fließfähige wässrige Dispersionen, dadurch gekennzeichnet, daß sie enthalten:

10 bis 89% Wasser

10 bis 65% Wirkstoff(e)

0,2 bis 20% einer oberflächenaktiven Zusammensetzung gemäß einem der Ansprüche 1 bis 5 oder 6 bis 10
0,8 bis 20% Gefrierschutzmittel
0 bis 10% Netzmittel
0 bis 5% Verdickungsmittel. ·

**Claims**

1. A process for the preparation of surface active compositions by phosphatation by phosphoric anhydride of at least one polyoxyalkylenated derivative $R_1—OR—OH$ (formula (V)), in which formula:

O—R represents a succession of identical or different $C_2—C_4$ oxyalkylenated units, in which the number of units can range from 1 to 80,

$R_1$ is a $C_8—C_{20}$ straight or branched chain alkyl or alkenyl radical or an aryl radical of formula (III)

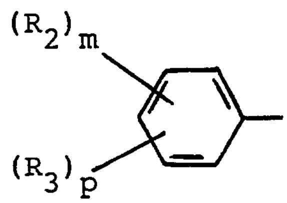

(III)

in which:

m is an integer of 1, 2 or 3
p is an integer of 1 or 2
$R_3$ is a hydrogen atom or a $C_1—C_4$ alkyl radical, and
$R_2$ is a $C_4—C_{12}$ alkyl radical or a radical of the following formula:

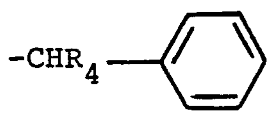

(IV)

wherein:

$R_4$ represents a hydrogen atom or a $C_1—C_4$ alkyl or phenyl radical;

and optionally neutralisation of the acid functions, the process being characterised in that the phosphatation operation is carried out in two steps:

a phosphatation step in the true sense which is effected by continuously introducing phosphoric anhydride into a medium which is subjected to turbulent agitation conditions, the medium being formed by said polyoxyalkylenated derivative containing water in a sufficient amount to initiate the phosphatation reaction, at a temperature of the order of 35 to 40°C at the beginning of the reaction, said temperature being maintained at a temperature lower than or equal to 45°C until the end of the operation of introducing the phosphoric anhydride, the total amount of phosphoric anhydride used corresponding to a polyoxyalkylenated derivative/$P_2O_5$ molar ratio equal to $3 \pm 0.3$,

followed by a step for maturing of the reaction medium obtained, said step being carried out under turbulent agitation conditions at a temperature of between 40 and 60°C.

2. A process according to claim 1 characterised in that $R_1$ represents a tri-(1-phenylethyl)phenyl, di-(1-phenylethyl)phenyl, nonylphenyl, octylphenyl, dodecylphenyl, tridecyl, octadecyl and octadecenyl radical, and that R represents an ethylene and/or propylene radical, the number of units O—R ranging from 3 to 60.

3. A process according to claim 1 or claim 2 characterised in that the amount of water is of the order of from 0.0025 to 0.05 mole per mole of polyoxyalkylenated derivative of formula V.

4. A process according to any one of claims 1 to 3 characterised in that the neutralisation operation is carried out by means of a base in a sufficient amount to produce a pH-value of at least 7, at a temperature not exceeding 60°C.

5. A process according to claim 4 characterised in that the base is an alkaline hydroxide or an amine.

6. Surface active compositions based on at least one mixture of phosphoric monoester of formula I and phosphoric diester of II of a polyoxyalkylenated derivative:

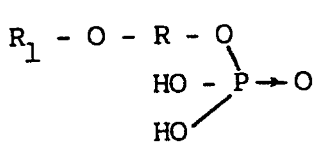

(I)

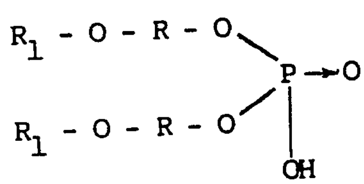

(II)

in which formulae:

O—R represents a succession of identical or different $C_2$—$C_4$ oxyalkylenated units, in which the number of units can range from 1 to 80,

$R_1$ is a $C_8$—$C_{20}$ straight or branched chain alkyl or alkenyl radical or an aryl radical of formula (III)

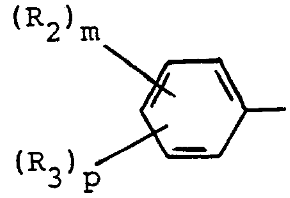

(III)

in which:

m is an integer of 1, 2 or 3
p is an integer of 1 or 2
$R_3$ is a hydrogen atom or a $C_1$—$C_4$ alkyl radical, and
$R_2$ is a $C_4$—$C_{12}$ alkyl radical or a radical of the following formula:

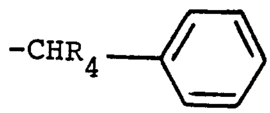

(IV)

wherein:

$R_4$ represents a hydrogen atom or a $C_1$—$C_4$ alkyl or phenyl radical, said compositions being characterised in that the phosphoric diester of formula II/phosphoric monoester of formula I molar ratio is of the order of 2.13 to 7 and that the mixture or mixtures of mono and diester represents or represent at least one molar percent of the surface active composition, the remainder being mainly formed by at least one polyoxyalkylenated derivative of formula V

$$R'_1—O—R'—OH \quad (V)$$

in which formula the symbols $R'_1$ and O—R′ bear the same meaning as the symbols $R_1$ and O—R and may or may not be identical to the symbols $R_1$ and O—R in formulae I and II.

7. Surface active compositions according to claim 6 characterised in that the mixture or mixtures of mono and diester(s) represents or represent at least 50 molar percent of the surface active composition.

8. Compositions according to claim 6 or claim 7 characterised in that $R_1$ and $R'_1$ are identical or different and represent a tri-(1-phenylethyl)phenyl, di-(1-phenylethyl)phenyl, nonylphenyl, octylphenyl, dodecylphenyl, tridecyl, octadecyl and octadecenyl radical and that R and R′ are identical or different and represent an ethylene and/or propylene radical the number of units O—R or O—R′ ranging from 3 to 60.

9. Neutralised surface active compositions obtained by neutralisation of the acid functions of the surface active compositions being the subject-matter of any one of claims 6 to 8.

10. Neutralised surface active compositions according to claim 9 characterised in that the neutralisation agent is an alkaline hydroxide or an amine.

11. Use of the surface active compositions obtained in accordance with the process being the subject of any one of claims 1 to 5 for the formulation of water-insoluble active materials.

12. Use of the surface active compositions being the subject of any one of claims 6 to 10 for the formulation of water-insoluble active materials.

13. Use according to claim 11 or claim 12 characterised in that the compositions are applied in the form of micro-granules.

14. Micro-granules characterised in that they contain:

from 10 to 95% of water-insoluble active material or materials
from 3 to 10% of surface active composition being the subject of any one of claims 1 to 5 or 6 to 10
from 2 to 10% of binding agent
from 0 to 75% of filler
from 0 to 5% of wetting agent and
from 0 to 5% of disintegrating agent.

15. Use of the surface active compositions being the subject of any one of claims 1 to 5 or 6 to 10 for the formulation of water-insoluble active materials in the form of fluid aqueous dispersions.

16. Fluid aqueous dispersions characterised in that they contain:

from 10 to 89% of water
from 10 to 65% of active material or materials
from 0.2 to 20% of surface active composition being the subject of any one of claims 1 to 5 or 6 to 10
from 0.8 to 20% of anti-freeze
from 0 to 10% of wetting agent, and
from 0 to 5% of thickening agent.